# EUROPÄISCHE PATENTSCHRIFT

(11) **EP 2 378 380 B1**
(45) Veröffentlichungstag und Bekanntmachung des Hinweises auf die Patenterteilung: **12.12.2012**
(21) Anmeldenummer: 10160159.9
(22) Anmeldetag: 16.04.2010
(51) Int. Cl.: G05B 19/048, G05B 19/418, H02B 1/28, H02H 7/00, H02H 7/26, F16P 3/08, H01H 27/00, H04L 29/08, G05B 19/00

(54) **Anschlussvorrichtung für Feldgeräte und Verfahren zum Betrieb**
Connection device for field devices and method for operating same
Dispositif de raccordement pour appareils de terrain et procédé de fonctionnement

(43) Veröffentlichungstag der Anmeldung: 19.10.2011
(73) Patentinhaber: Siemens Aktiengesellschaft, 80333 München (DE)
(72) Erfinder: Volkmann, Hans, 90559, Burgthann (DE)

(56) Entgegenhaltungen:
- WO-A1-2006/108881
- WO-A2-2005/053221
- DE-B- 1 039 573
- DE-B- 1 230 113
- DE-C1- 3 943 376

## Beschreibung

Die Erfindung betrifft eine Anschlussvorrichtung für Feldgeräte in einer explosionsgefährdeten Zone, umfassend einen Eingangsklemmbereich für eine erste Anschlussleitung, einen Ausgangsklemmbereich für eine zweite Anschlussleitung, Abdeckmittel zum Schutz zumindest eines der Klemmbereiche, ein erstes Schaltelement zum Durchschalten eines elektrischen Stromes vom Eingangsklemmbereich auf den Ausgangsklemmbereich, eine Steuereinheit zum Steuern des ersten Schaltelementes.

Des Weiteren betrifft die Erfindung ein Verfahren zum Betrieb einer Anschlussvorrichtung für Feldgeräte in einer explosionsgefährdeten Zone, wobei die Anschlussvorrichtung innerhalb einer Reihenschaltung zwischen einer Vorgängeranschlussvorrichtung und einer Nachfolgeranschlussvorrichtung betrieben wird, wobei über einen Eingangsklemmbereich eine erste Anschlussleitung und über einen Ausgangsklemmbereich eine zweite Anschlussleitung angeschlossen wird, damit die Anschlussvorrichtung innerhalb der Reihenschaltung über ein Speisegerät mit einem Strom versorgt wird, wobei Abdeckmittel zum Schutz zumindest eines der Klemmbereiche vorgesehen werden.

Derartige Anschlussvorrichtungen für Feldgeräte sind aus WO 2005/053221 A2 bekannt. Zur Ausführbarkeit der Erfindung bezüglich der Anschlussvorrichtungen für Feldgeräte im Betrieb eines Netzwerkes, insbesondere eines PROFIBUS PA-Netzwerkes, wird ausdrücklich auf die Schrift WO 2005/053221 A2 verwiesen. Der Inhalt dieser Schrift ist Bestandteil der vorliegenden Anmeldung. Auch ist aus der DE 12 30 113 B eine Kleinstation für schlagwetter- und explosionsgefährdete Betriebe bekannt. Die Kleinstation setzt sich aus mehreren in Reihe geschalteten Hochspannungsschalteinheiten zusammen.

Bei den bekannten Abzweigelementen bzw. Anschlussvorrichtungen für Feldgeräte ist es bei einem laufenden Betrieb, beispielsweise eines PA/FF-Busses, insbesondere bei einem Betrieb in einer explosionsgefährdeten Zone, von Nachteil, dass die Geräte nicht ohne Weiteres ausgetauscht werden können. Denn ein Austausch von Anschlussvorrichtungen in einer explosionsgefährdeten Zone ist nur zulässig, wenn die Leitungen spannungsfrei bzw. die maximalen Ströme und Spannungen an den Klemmen begrenzt werden. Bei den bisher bekannten Anschlussvorrichtungen ist ein Austausch der Anschlussvorrichtung innerhalb der Ex-Zone nur im spannungslosen Zustand, d.h. im ausgeschalteten Zustand möglich. Ein weiterer Busausbau mit derartigen Anschlussvorrichtungen ist damit eingeschränkt. Beispielsweise erlaubt ein PA/FF-Bus Spannungen von 32 V und Ströme von über einem 1 A. Bei diesen Spannungen und Strömen ist in der Ex-Zone das An- und Abklemmen von Anschlussleitungen nicht erlaubt.

Der Erfindung liegt daher die Aufgabe zugrunde, eine Anschlussvorrichtung wie sie aus WO 2005/053221 A2 bekannt ist, derart weiterzubilden, dass ein Busaufbau, insbesondere für einen redundant betriebenen Bus, flexibler zu gestalten ist.

Für die eingangs genannte Anschlussvorrichtung wird die Aufgabe durch die Merkmalskombination des Anspruchs 1 gelöst. Da für die Anschlussvorrichtungen im Betrieb innerhalb einer explosionsgefährdeten Zone vorgeschrieben ist, dass die Klemmbereiche für Anschlussleitungen mit IP30-Abdeckungen zu versehen sind, ist es von Vorteil, dass bei einer gewollten Manipulation an den Anschlussvorrichtungen, beispielsweise das An- und Abklemmen von Anschlussleitungen, ein Abdeckmittel, wie eine IP30-Abdeckung, zunächst geöffnet werden muss. Über ein Sensormittel kann dieses Öffnen detektiert werden und der Stromfluss von dem Eingangsklemmbereich auf den Ausgangsklemmbereich bzw. der Stromfluss auf den jeweiligen Klemmbereich, an welchem die Abdeckung geöffnet ist, kann somit abgeschaltet werden und einer gefährlichen Funkenbildung im explosionsgefährdeten Bereich kann somit vorgebeugt werden.

Dabei ist die Anschlussvorrichtung zusätzlich mit einem ersten Messmittel zum Messen des elektrischen Stromes versehen, wobei das Messmittel derart ausgestaltet ist, dass ein ermittelter erster Messwert mit einem Grenzwert vergleichbar ist und ein Unterschreiten des Grenzwertes erkennbar ist und weiterhin ausgestaltet, dass unabhängig von der Detektion des ersten Sensormittels der Stromfluss zwischen dem Eingangsklemmbereich und dem Ausgangsklemmbereich aufgrund der Grenzwertunterschreitung unterbrechbar ist. Vorteilhaft an der Detektion der Grenzwertunterschreitung ist es, dass beispielsweise beim Anschluss einer weiteren Anschlussvorrichtung in einer Reihenschaltung zu der beanspruchten Anschlussvorrichtung ein Öffnen des Abdeckmittels der Anschlussvorrichtung in der weiteren Anschlussvorrichtung detektiert werden kann. Das bedeutet, wenn an der Anschlussvorrichtung das Abdeckmittel geöffnet wird und somit über das Sensormittel das Öffnen detektiert wird und damit der Stromfluss unterbrochen wird, so kann auch in der angeschlossenen weiteren Anschlussvorrichtung ein Strom nicht mehr fließen.

Die Abdeckmittel sehen ein über den Eingangsklemmbereich angeordnetes erstes Abdeckmittel und ein über den Ausgangsklemmbereich angeordnetes zweites Abdeckmittel vor. Dies ist beispielsweise in einer Ausgestaltung von Vorteil, bei welcher eine erste Anschlussleitung von links an die Anschlussvorrichtung geführt wird und eine zweite Anschlussleitung von rechts von der Anschlussvorrichtung weggeführt wird. Soll beispielsweise bei der Anschlussvorrichtung nur eine Anschlussleitung ausgewechselt werden, so ist ein seitenbezogenes Spannungsfreischalten durch Öffnen des jeweiligen Abdeckmittels von Vorteil.

Bei dieser seitenbezogenen Spannungsfreischaltung ist es von Vorteil, dass dem ersten Abdeckmittel das erste Sensormittel und dem zweiten Abdeckmittel ein zweites Sensormittel zugeordnet ist. Die Anschlussvorrichtung mit ihren Abdeckmitteln ist dabei derart ausgestaltet, dass das zweite Sensormittel ein Öffnen des zweiten Abdeckmittels detektiert.

Dieses seitenbezogene Spannungsfreischalten wird dadurch realisiert, dass mit einem in Reihe zu dem ersten Schaltelement angeordnetem zweiten Schaltelement, wobei das zweite Sensormittel mit der Steuereinheit in Verbindung steht und die Steuereinheit ausgestaltet ist, das zweite Schaltelement zu betätigen.

Weiterhin ist die Anschlussvorrichtung ausgestaltet mit einem zweiten Messmittel zum Messen des elektrischen Stromes, wobei das zweite Messmittel derart ausgestaltet ist, dass ein ermittelter zweiter Messwert mit einem Grenzwert vergleichbar ist und ein Unterschreiten des Grenzwertes erkennbar ist, weiterhin ausgestaltet, dass unabhängig von der Detektion des zweiten Sensormittels der Stromfluss zwischen Eingangs- und Ausgangsklemmbereich und umgekehrt aufgrund der Grenzwertunterschreitung unterbrechbar ist.

Für eine fehlerfreie Detektion des Öffnens der Abdeckmittel empfiehlt sich, die Abdeckmittel mit einem Magneten auszugestalten, welcher einen Hallsensor aktivieren. Der Hallsensor könnte sich beispielsweise in einem Verguss des Gerätes direkt auf der Leiterplatte des Gerätes befinden. Dementsprechend befindet sich in dem Abdeckmittel, welches als eine Abdeckklappe in IP30 ausgestaltet ist, ein Permanentmagnet, welcher beim Öffnen der Abdeckklappe über den Hallsensor ein Signal auslöst, welches über die Steuereinheit ausgewertet wird.

Bezogen auf einem redundanten Betrieb der Anschlussvorrichtung in einem redundant ausgelegten Kommunikationsring, d.h. mehrere Anschlussvorrichtungen sind in Reihe hintereinander geschaltet und bilden einen Kommunikationsring, ist es sinnvoll, die Spannungen bzw. Ströme, welche von beiden Seiten der Anschlussvorrichtungen über zumindest ein Speisegerät bereitgestellt werden, freizuschalten.

Es ist daher von Vorteil, dass auch die angeschlossene Anschlussleitung zu einer benachbarten Anschlussvorrichtung spannungsfrei geschaltet werden kann. Durch die geöffnete Abdeckklappe und dem damit betätigten Schaltelement kann kein Strom fließen. Dies wird in der benachbarten Anschlussvorrichtung durch das Messmittel detektiert und in der Steuereinheit erkannt. Damit wird auch diese Anschlussleitung von der benachbarten Anschlussvorrichtung spannungsfrei geschaltet.

Die eingangs genannte Aufgabe wird ebenfalls durch ein Verfahren gemäß Anspruch 4 zum Betrieb einer Anschlussvorrichtung für Feldgeräte in einer explosionsgefährdeten Zone gelöst. Bei dem, wie eingangs genannt, betreffenden Verfahren wird bei einem Öffnen des Abdeckmittels das Öffnen detektiert und daraufhin ein erstes Schaltelement geöffnet, wodurch der Stromfluss des Stromes vom Eingangsklemmbereich auf den Ausgangsklemmbereich unterbrochen wird.

Ausgehend von dem Betrieb der Anschlussvorrichtungen in einem redundanten Kommunikationsring werden die Anschlussvorrichtungen in einer Reihenschaltung zu weiteren Anschlussvorrichtungen betrieben. Das bedeutet, für die Anschlussvorrichtung mit dem geöffneten Abdeckmittel wird der Stromfluss zu einer Vorgängeranschlussvorrichtung oder einer Nachfolgeranschlussvorrichtung verändert, dieser veränderte Stromfluss wird in der Vorgängeranschlussvorrichtung oder der Nachfolgeranschlussvorrichtung gemessen, und bei Unterschreitung eines Grenzwertes ebenfalls der Stromfluss des Stromes vom Eingangsklemmbereich auf den Ausgangsklemmbereich der jeweiligen Vorgänger- oder der Nachfolgeranschlussvorrichtung unterbrochen. Das bedeutet, betätigt man die Abdeckmittel einer Anschlussvorrichtung, bei welcher linksseitig eine weitere Anschlussvorrichtung und rechtsseitig ebenfalls eine weitere Anschlussvorrichtung in einer Reihenschaltung angeschlossen sind, wird zum einen durch die Betätigung in der Anschlussvorrichtung mit dem geöffneten Abdeckmittel ein Schaltelement betätigt, so dass der Stromfluss unterbrochen wird, diese Betätigung und die Unterbrechung des Stromflusses hat aber zur Folge, dass beispielsweise in der linksseitig angeschlossenen Vorgängeranschlussvorrichtung diese Betätigung durch Messen des Stromes ebenfalls detektiert wird und über eine Steuereinheit in der Vorgängeranschlussvorrichtung ebenfalls das Schaltelement in der Vorgängeranschlussvorrichtung betätigt wird, so dass die betroffene Anschlussvorrichtung mit der geöffneten Abdeckklappe von der Vorgängeranschlussvorrichtung linksseitig spannungsfrei geschaltet wird.

Für den redundanten Betrieb ist es notwendig, dass in der Reihenschaltung von mehreren Anschlussvorrichtungen, welche wiederum als ein Ring zusammengestellt ist, zumindest ein Speisegerät vorhanden ist, dabei wird verfahrensgemäß die Versorgung der Anschlussvorrichtungen von der Seite ihres jeweiligen Eingangsklemmbereichs und von der Seite ihres jeweiligen Ausgangsklemmbereichs erfolgen.

Eine weitere verfahrensgemäße Ausgestaltung ist es, wenn über den Eingangsklemmbereich ein erstes Abdeckmittel und über den Ausgangsklemmbereich ein zweites Abdeckmittel vorgesehen ist. Durch das Öffnen des ersten Abdeckmittels wird das erste Schaltelement geöffnet und durch das Öffnen des zweiten Abdeckmittels wird das zweite Schaltelement geöffnet. Dabei wird durch das Öffnen der Schaltelemente aufgrund der festgestellten Grenzwertunterschreitung durch die in den Vorgänger- oder Nachfolgeranschlussvorrichtung angeordneten Messmitteln die Anschlussvorrichtung mit den geöffneten Abdeckmitteln einseitig und/oder beidseitig spannungsfrei geschaltet und dadurch ein gefahrloses Arbeiten an den Klemmbereichen ermöglicht.

Ein Ausgestaltungsbeispiel ist in der Zeichnung näher beschrieben. Es zeigt
- FIG 1: einen Aufbau in Reihenschaltung von Anschlussvorrichtungen zu einem redundanten Kommunikationsring und
- FIG 2: eine Anschlussvorrichtung mit angeschlossenen Feldgeräten

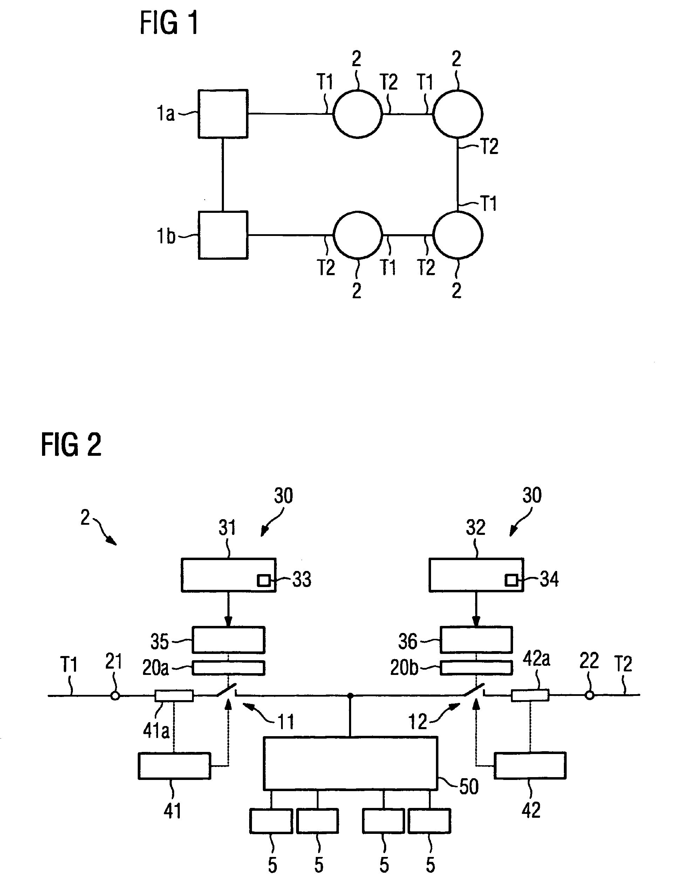

Gemäß FIG 1 sind vier Anschlussvorrichtungen 2 zu einer Reihenschaltung hintereinander geschaltet. Die Anschlussvorrichtungen 2 weisen alle dasselbe Bezugszeichen auf, da sie identisch aufgebaut sind. Ausgehend von einem ersten Speisegerät 1a ist über eine erste Anschlussleitung T1 eine erste Anschlussvorrichtung angeschlossen. An die erste Anschlussvorrichtung ist über eine zweite Anschlussleitung T2 eine zweite Anschlussvorrichtung in Reihe angeschlossen. An die zweite Anschlussvorrichtung schließt sich ebenfalls in einer Reihenschaltung eine dritte Anschlussvorrichtung und eine vierte Anschlussvorrichtung an. Die vierte Anschlussvorrichtung ist wiederum an ein zweites Speisegerät 1b angeschlossen, wobei das erste Speisegeräte 1a und zweite Speisegerät 1b ebenfalls in Verbindung stehen. Durch diese ringförmige Reihenschaltung ist ein redundanter PA/FF-Bus aufgebaut.

Gemäß FIG 2 ist eine Anschlussvorrichtung schematisch näher beschrieben. Die Anschlussvorrichtung 2 weist linksseitig einen Eingangsklemmbereich 21 auf, an welchen eine erste Anschlussleitung T1 angeschlossen werden kann. Rechtsseitig weist die Anschlussvorrichtung 2 einen Ausgangsklemmbereich 22 auf, an welchen eine zweite Anschlussleitung T2 angeschlossen werden kann. Die derartig angeschlossene erste Anschlussleitung T1 und die zweite Anschlussleitung T2 können über ein erstes Schaltelement 11 und ein zweites Schaltelement 12 derart durchverbunden werden, dass ein Stromfluss von der ersten Anschlussleitung T1 über den Eingangsklemmbereich 21 zu der zweiten Anschlussleitung T2 über den Ausgangsklemmbereich 22 geführt werden kann. Der Stromfluss ist ebenso ausgehend von der zweiten Anschlussleitung T2 über den Ausgangsklemmbereich 22 zu dem Eingangsklemmbereich 21 zur ersten Anschlussleitung T1 möglich. Für den Betrieb einer derartigen Anschlussvorrichtung 2 in einer explosionsgefährdeten Zone ist es notwendig, dass der Eingangsklemmbereich 21 und der Ausgangsklemmbereich 22 jeweils mit einem ersten Abdeckmittel 31 und einem zweiten Abdeckmittel 32 geschützt ist. Das erste Abdeckmittel 31 weist einen ersten Magneten 33 und das zweite Abdeckmittel 32 weist einen zweiten Magneten 34 auf. Die Magneten 33, 34 arbeiten mit einem ersten Sensormittel 35 und einem zweiten Sensormittel 36 zusammen. Die Sensormittel 35, 36 sind als Hallsensoren ausgestaltet. Das heißt, beim Öffnen des ersten Abdeckmittels 31 wird der erste Magnet 33 von dem ersten Sensormittel 35 weggeführt, welches somit ein Signal auslösen kann, welches an eine erste Steuereinheit 20a weitergeleitet wird. Dabei ist die erste Steuereinheit 20a derart ausgestaltet, dass sie das erste Schaltelement 11 betätigen kann und somit den Stromkreis zwischen dem Eingangsklemmbereich 21 und dem Ausgangsklemmbereich 22 auftrennt. Analog zu dieser eingangsseitigen Auftrennung des Stromkreises über das erste Schaltelement 11 kann der ausgangsseitige Stromkreis über das zweite Schaltelement 12 ebenfalls mit dem zweiten Sensormittel 36 und der zweiten Steuereinheit 20b aufgetrennt werden.

Für den Anschluss von Feldgeräten 5 steht eine Steuerlogik für Feldgeräte 50 bereit.

Für die nachfolgende Betrachtung ist es notwendig, sich drei identisch aufgebaute Anschlussvorrichtungen 2 in einer Reihenschaltung vorzustellen. Es wird dabei von einer Mittelanschlussvorrichtung, einer Vorgängeranschlussvorrichtung und einer Nachfolgeranschlussvorrichtung ausgegangen. Aus Wartungsgründen soll beispielsweise bei der Mittelanschlussvorrichtung die erste Anschlussleitung T1 an dem Eingangsklemmbereich 21 gelöst werden. Dazu wird bei der Mittelanschlussvorrichtung das erste Abdeckmittel 31 geöffnet, wodurch die erste Steuereinheit 20a ein Signal erhält und über das Schaltelement 11 der Stromkreis aufgetrennt wird. Die Vorgängeranschlussvorrichtung steht mit dem Eingangsklemmbereich 21 der Mittelanschlussvorrichtung in Verbindung. Durch die Auftrennung des Stromkreises durch das erste Schaltelement 11 kann auch in der Vorgängeranschlussvorrichtung kein Strom mehr fließen. Dieser nicht vorhandene Stromfluss in der Vorgängeranschlussvorrichtung wird über ein erstes Messmittel 41 und einem ersten Widerstand 41a detektiert. Diese Detektion über das erste Messmittel 41 hat zur Folge, dass ebenfalls das erste Schaltelement 11 in der Vorgängeranschlussvorrichtung betätigt wird. Diese Betätigung hat ebenfalls ein Öffnen des Stromkreises zu Folge. Es ist somit sichergestellt, dass zum einen in der Mittelanschlussvorrichtung über das geöffnete erste Schaltelement 11 kein Strom mehr fließen kann und in der Vorgängeranschlussvorrichtung ebenfalls über das geöffnete Schaltelement 11 auch kein Strom mehr fließen kann, d.h. der Eingangsklemmbereich 21 der Mittelanschlussvorrichtung ist über die Vorgängeranschlussvorrichtung spannungsfrei geschaltet.

Für den Ausgangsklemmbereich 22 ist der Aufbau und der Verfahrensablauf zu dem bereits beschriebenen Spannungsfreischalten des Eingangsklemmbereiches 21 analog zu sehen. Durch das Öffnen des zweiten Abdeckmittels 32 wird das zweite Schaltelement 12 betätigt, welches den Stromkreis zum Eingangsklemmbereich 22 auftrennt. Dieser Auftrennung des Stromkreises macht sich in der Nachfolgeanschlussvorrichtung durch einen nicht vorhandenen Stromfluss bemerkbar. Dieser nicht vorhandene Stromfluss kann wiederum über ein Messmittel der Nachfolgeanschlussvorrichtung detektiert werden und die Detektion lässt auch in der Nachfolgeranschlussvorrichtung ein Auftrennen des Stromkreises zu. Nun ist die Mittelanschlussvorrichtung beidseitig über ihre jeweilige Vorgängeranschlussvorrichtung und ihre Nachfolgeranschlussvorrichtung spannungsfrei geschaltet. Ein Arbeiten an den Klemmenbereich in einer explosionsgefährdeten Umgebung ist somit gefahrlos möglich.

## Patentansprüche

1. Anschlussvorrichtung (2) für Feldgeräte (5) in einer explosionsgefährdeten Zone, umfassend
einen Eingangsklemmbereich (21) für eine erste Anschlussleitung (T1), einen Ausgangsklemmbereich (22) für eine zweite Anschlussleitung (T2), Abdeckmittel (30) zum Schutz der Klemmbereiche (21, 22), wobei die Abdeckmittel (30) ein über den Eingangsklemmbereich (21) angeordnetes erstes Abdeckmittel (31) und ein über den Ausgangsklemmbereich (22) angeordnetes zweites Abdeckmittel (32) aufweisen,
ein erstes Schaltelement (11) und ein zweites Schaltelement (12) zum Durchschalten eines elektrischen Stromes (I) vom Eingangsklemmbereich (21) auf den Ausgangsklemmbereich (22), eine Steuereinheit (20a, 20b) zum Steuern des ersten Schaltelementes (11) und zum Steuern des zweiten Schaltelements (12),
mit einem ersten Sensormittel (35), welches ein Öffnen des Abdeckmittels (30) detektiert, wobei das erste Sensormittel (35) mit der Steuereinheit (20a, 20b) in Verbindung steht und die Steuereinheit (20a, 20b) ausgestaltet ist das erste Schaltelement (35) zu öffnen, wobei dem ersten Abdeckmittel (31) das erste Sensormittel (35) und dem zweiten Abdeckmittel (32) ein zweites Sensormittel (36) zugeordnet ist, wobei in Reihe zu dem ersten Schaltelement (11) das zweite Schaltelement (12) angeordnet ist, wobei das zweite Sensormittel (36) mit der Steuereinheit (20a, 20b) in Verbindung steht und die Steuereinheit (20a, 20b) ausgestaltet ist das zweite Schaltelement (12) zu öffnen,
mit einem Messmittel (41) zum Messen des elektrischen Stromes (I), wobei das Messmittel (41) derart ausgestaltet ist, dass ein ermittelter Messwert mit einem Grenzwert vergleichbar ist und ein Unterschreiten des Grenzwertes erkennbar ist, weiterhin ausgestaltet, das unabhängig von der Detektion des ersten Sensormittels (35) oder des zweiten Sensormittels (36) der Stromfluss zwischen Eingangsklemmbereich (21) und Ausgangsklemmbereich (22) aufgrund der Grenzwertwert Unterschreitung unterbrechbar ist.

2. Anschlussvorrichtung (2) nach Anspruch 1, ausgestaltet mit einem zweiten Messmittel (42) zum Messen des elektrischen Stromes (I), wobei das zweite Messmittel (42) derart ausgestaltet ist, dass ein ermittelter zweiter Messwert mit einem Grenzwert vergleichbar ist und ein Unterschreiten des Grenzwertes erkennbar ist, weiterhin ausgestaltet, das unabhängig von der Detektion des zweiten Sensormittels (36) der Stromfluss zwischen Eingangsklemmbereich (21) und Ausgangsklemmbereich (22) und umgekehrt aufgrund der Grenzwertwert Unterschreitung unterbrechbar ist.

3. Anschlussvorrichtung (2) nach einem der Ansprüche 1 oder 2, wobei die Abdeckmittel (31, 32) einen Magneten (33, 34) aufweisen, welche einen Hallsensor aktivieren.

4. Verfahren zum Betrieb einer Anschlussvorrichtung (2) für Feldgeräte (5) in einer explosionsgefährdeten Zone, wobei die Anschlussvorrichtung (2) innerhalb einer Reihenschaltung zwischen einer Vorgängeranschlussvorrichtung und einer Nachfolgeranschlussvorrichtung betrieben wird, wobei über einen Eingangsklemmbereich (21) eine erste Anschlussleitung (T1) und über einen Ausgangsklemmbereich (22) eine zweite Anschlussleitung (T2) angeschlossen wird damit die Anschlussvorrichtung (2) innerhalb der Reihenschaltung über ein Speisegerät (1) mit einem Strom (I) versorgt wird, wobei Abdeckmittel (30) zum Schutz zumindest eines der Klemmbereiche (21, 22) vorgesehen werden, und bei einem Öffnen des Abdeckmittels (30) das Öffnen detektiert wird und daraufhin ein erstes Schaltelement (11) geöffnet wird wodurch der Stromfluss des Stromes (I) vom Eingangsklemmbereich (21) auf den Ausgangsklemmbereich (22) unterbrochen wird, wobei durch den Betrieb der weiteren Anschlussvorrichtungen (2) in der Reihenschaltung zu der Anschlussvorrichtung (2) mit dem geöffneten Abdeckmittel (30) der Stromfluss zu der Vorgängeranschlussvorrichtung (2) oder zu einer Nachfolgeranschlussvorrichtung (2) verändert wird, und dieser in der Vorgängeranschlussvorrichtung (2) oder der Nachfolgeranschlussvorrichtung (2) gemessen wird, und bei Unterschreitung eines Grenzwertes ebenfalls der Stromfluss des Stromes (I) vom Eingangsklemmbereich (21) auf den Ausgangsklemmbereich (22) der jeweiligen Vorgänger- oder der Nachfolgeranschlussvorrichtung (2) unterbrochen wird.

5. Verfahren nach Anspruch 4, wobei die Versorgung der Anschlussvorrichtungen (2) von der Seite ihres jeweiligen Eingangsklemmbereiches (21) und von der Seite ihres jeweiligen Ausgangsklemmbereiches (22) erfolgt.

6. Verfahren nach einem der Ansprüche 4 oder 5, wobei über den Eingangsklemmbereich (21) ein erstes Abdeckmittel (31) und über den Ausgangsklemmbereich (22) ein zweites Abdeckmittel (32) vorgesehen ist, durch das Öffnen des ersten Abdeckmittels (31) das erste Schaltelement (11) geöffnet wird und durch das Öffnen des zweiten Abdeckmittels (32) das zweite Schaltelement (12) geöffnet wird.

7. Verfahren nach einem der Ansprüche 4 bis 6, wobei durch das Öffnen der Schaltelemente (11, 12) aufgrund der festgestellten Grenzwertwert Unterschreitung durch die in den Vorgänger- oder der Nachfolger Anschlussvorrichtung (2) angeordneten Messmitteln (41, 42) die Anschlussvorrichtung (2) mit den geöffneten Abdeckmitteln (30, 31) einseitig und oder beidseitig spannungsfrei geschaltet wird und dadurch ein gefahrloses arbeiten an den Klemmbereichen (21, 22) ermöglicht wird.

## Claims

1. Connecting apparatus (2) for field devices (5) in an explosion-hazard zone, comprising an input terminal area (21) for a first connecting line (T1), an output terminal area (22) for a second connecting line (T2), a covering means (30) for protection of the terminal areas (21, 22), wherein the cover means (30) has a first cover means (31), which is arranged over the input terminal area (21), and a second cover means (32), which is arranged over the output terminal area (22), a first switching element (11) and a second switching element (12) for passing an electric current (I) from the input terminal area (21) to the output terminal area (22), a control unit (20a, 20b) for controlling the first switching element (11) and for controlling the second switching element (12), having a first sensor means (35), which detects opening of the cover means (30), with the first sensor means (35) being connected to the control unit (20a, 20b), and with the control unit (20a, 20b) being designed to open the first switching element (35), with the first sensor means (35) being associated with the first cover means (31), and a second sensor means (36) being associated with the second cover means (32), with the second switching element (12) being arranged in series with the first switching element (11), with the second sensor means (36) being connected to the control unit (20a, 20b), and with the control unit (20a, 20b) being designed to open the second switching element (12), having a measurement means (41) for measurement of the electric current (I), with the measurement means (41) being designed such that a determined measured value can be compared with a limit value and undershooting of the limit value can be identified, furthermore designed such that the current flow between the input terminal area (21) and the output terminal area (22) can be interrupted independently of the detection carried out by the first sensor means (35) or the second sensor means (36) on the basis of the limit value being undershot.

2. Connecting apparatus (2) according to Claim 1, designed with a second measurement means (42) for measurement of the electric current (I), with the second measurement means (42) being designed such that a determined second measured value can be compared with a limit value, and undershooting of the limit value can be identified, furthermore designed such that the current flow between the input terminal area (21) and the output terminal area (22) and vice versa can be interrupted independently of the detection carried out by the second sensor means (36) on the basis of the limit value being undershot.

3. Connecting apparatus (2) according to either of Claims 1 and 2, wherein the cover means (31, 32) have a magnet (33, 34) which activates a Hall sensor.

4. Method for operation of a connecting apparatus (2) for field devices (5) in an explosion-hazard zone, with the connecting apparatus (2) being operated within a series circuit between a predecessor connecting apparatus and a successor connecting apparatus, with a first connecting line (T1) being connected via an input terminal area (21) and with a second connecting line (T2) being connected via an output terminal area (22) in order that the connecting apparatus (2) is supplied with current (I) via a feed device (1) within the series circuit, with cover means (30) being provided for protection of at least one of the terminal areas (21, 22), and, when the cover means (30) is opened, the opening is detected and a first switching element (11) is then opened, thus interrupting the current flow of the current (I) from the input terminal area (21) to the output terminal area (22), with the current flow to the predecessor connecting apparatus (2) or to a successor connecting apparatus (2) being changed by the operation of the further connecting apparatuses (2) in the series circuit with the connecting apparatus (2) with the cover means (30) open, and with this being measured in the predecessor connecting apparatus (2) or the successor connecting apparatus (2), and with the current flow of the current (I) from the input terminal area (21) to the output terminal area (22) of the respective predecessor or successor connecting apparatus (2) likewise being interrupted if a limit value is undershot.

5. Method according to Claim 4, with the connecting apparatuses (2) being supplied from the side of their respective input terminal area (21) and from the side of their respective output terminal area (22).

6. Method according to either of Claims 4 and 5, with a first cover means (31) being provided over the input terminal area (21) and with a second cover means (32) being provided over the output terminal area (22), with the first switching element (11) being opened by the opening of the first cover means (31), and with the second switching element (12) being opened by the opening of the second cover means (32).

7. Method according to one of Claims 4 to 6, with the connecting apparatus (2) with the open over means (30, 31) being switched to free of voltage on one side and/or on both sides by the opening of the switching elements (11, 12) on the basis of the undershooting of the limit value found by the measurement means (41, 42) arranged in the predecessor or the successor connecting apparatus (2), allowing work to be carried out safely on the terminal areas (21, 22).

## Revendications

1. Dispositif ( 2 ) de raccordement d'appareils ( 5 ) de terrain dans une zone menacée d'explosion, comprenant une partie ( 21 ) de borne d'entrée pour une première ligne ( T1 ) de connexion, une partie ( 22 ) de borne de sortie pour une deuxième ligne ( T2 ) de connexion, des moyens ( 30 ) de recouvrement pour la protection des parties ( 21, 22 ) de borne, les moyens ( 30 ) de recouvrement ayant un premier moyen ( 31 ) de recouvrement disposé sur la partie ( 21 ) de borne d'entrée et un deuxième moyen ( 32 ) de recouvrement disposé sur la partie ( 22 ) de borne de sortie,
un premier élément ( 11 ) de commutation et un deuxième élément ( 12 ) de commutation pour le passage d'un courant ( I ) électrique de la partie ( 21 ) de borne d'entrée à la partie ( 22 ) de borne de sortie, une unité ( 20a, 20b ) de commande du premier élément ( 11 ) de commutation et de commande du deuxième élément ( 12 ) de commutation,
comprenant un premier moyen ( 35 ) capteur, qui détecte une ouverture du moyen ( 30 ) de recouvrement, le premier élément ( 35 ) capteur étant en liaison avec l'unité ( 20a, 20b ) de commande et l'unité ( 20a, 20b ) de commande étant conformée pour ouvrir le premier élément ( 35 ) de commutation, le premier moyen ( 35 ) capteur étant associé au premier moyen ( 31 ) de recouvrement et un deuxième moyen ( 36 ) capteur étant associé au deuxième moyen ( 32 ) de recouvrement, le deuxième élément ( 12 ) de commutation étant monté en série avec le premier élément ( 11 ) de commutation, le deuxième moyen ( 36 ) capteur étant en liaison avec l'unité ( 20a, 20b ) de commande et l'unité ( 20a, 20b ) de commande étant conformée pour ouvrir le deuxième élément ( 12 ) de commutation,
comprenant un moyen ( 41 ) de mesure pour la mesure du courant ( I ) électrique, le moyen ( 41 ) de mesure étant conformé de manière à ce qu'une valeur de mesure déterminée puisse être comparée à une valeur limite et qu'un passage en dessous de la valeur limite puisse être détecté, en étant conformé, en outre, de manière à ce que, indépendamment de la détection du premier moyen ( 35 ) capteur ou du deuxième moyen ( 36 ) capteur, le flux de courant entre la partie ( 21 ) de borne d'entrée et la partie ( 22 ) de borne de sortie puisse être interrompu en raison du fait que l'on est passé en dessous de la valeur limite.

2. Dispositif ( 2 ) de raccordement suivant la revendication 1, conformé en ayant un deuxième moyen ( 42 ) de mesure pour la mesure du courant ( I ) électrique, le deuxième moyen ( 42 ) de mesure étant conformé de manière à pouvoir comparer une deuxième valeur de mesure déterminée à une valeur limite et à pouvoir détecter que l'on passe en dessous de la valeur limite, en étant conformé, en outre, de manière à ce que, indépendamment de la détection du deuxième moyen ( 36 ) capteur, le flux de courant entre la partie ( 21 ) de borne d'entrée et la partie ( 22 ) de borne de sortie et inversement puisse être interrompu en raison du fait que l'on est passé en dessous de la valeur limite.

3. Dispositif ( 2 ) de raccordement suivant la revendication 1 ou 2, dans lequel les moyens ( 31, 32 ) de recouvrement ont un aimant ( 33, 34 ), qui active un capteur de Hall.

4. Procédé pour faire fonctionner un dispositif ( 2 ) de raccordement d'appareils ( 5 ) de terrain dans une zone menacée d'explosion, le dispositif ( 2 ) de raccordement fonctionnant dans un montage en série entre un dispositif de connexion précédent et un dispositif de connexion suivant, dans lequel une première ligne ( T1 ) de connexion est raccordée par une partie ( 21 ) de borne d'entrée et une deuxième ligne ( T2 ) de connexion est raccordée par une deuxième partie ( 22 ) de borne de sortie, afin que le dispositif ( 2 ) de raccordement soit alimenté en un courant ( I ) dans le montage en série par un appareil ( 1 ) d'alimentation, des moyens ( 30 ) de recouvrement pour la protection d'au moins l'une des parties ( 21, 22 ) de borne étant prévus et, lors d'une ouverture des moyens ( 30 ) de recouvrement, l'ouverture est détectée et ensuite un premier élément ( 11 ) de commutation est ouvert, de sorte que le flux du courant ( I ) allant de la partie ( 21 ) de borne d'entrée à la partie ( 22 ) de borne de sortie est interrompu, dans lequel par le fonctionnement des autres dispositifs ( 2 ) de raccordement dans le montage en série avec le dispositif ( 2 ) de raccordement par le moyen ( 30 ) de recouvrement ouvert, le flux de courant allant au dispositif ( 2 ) de raccordement précédent ou à un dispositif ( 2 ) de raccordement suivant est modifié et ce flux est mesuré dans le dispositif ( 2 ) de raccordement précédent ou dans le dispositif ( 2 ) de raccordement suivant et, si l'on passe en dessous d'une valeur limite, le flux du courant ( I ) de la partie ( 21 ) de borne d'entrée à la partie ( 22 ) de borne de sortie du dispositif ( 2 ) de raccordement respectif précédent ou suivant est interrompu également.

5. Dispositif suivant la revendication 4, dans lequel l'alimentation des dispositifs ( 2 ) de raccordement s'effectue par le côté de leur partie ( 21 ) de borne d'entrée respective et par le côté de leur partie ( 22 ) de borne de sortie respective.

6. Dispositif suivant la revendication 4 ou 5, dans lequel il est prévu, sur la partie ( 21 ) de borne d'entrée, un premier moyen ( 31 ) de recouvrement et, sur la partie ( 22 ) de borne de sortie, un deuxième moyen ( 32 ) de recouvrement, le premier élément ( 11 ) de commutation étant ouvert par l'ouverture du premier moyen ( 21 ) de recouvrement et le deuxième élément ( 12 ) de commutation étant ouvert par l'ouverture du deuxième moyen ( 32 ) de recouvrement.

7. Dispositif suivant l'une des revendications 4 à 6, dans lequel, par l'ouverture des éléments ( 11, 12 ) de commutation, en raison de la constatation que l'on est passé en dessous de la valeur limite, par les moyens ( 41, 42 ) de mesure disposés dans le dispositif ( 2 ) de raccordement précédent ou suivant, le dispositif ( 2 ) de raccordement ayant les moyens ( 30, 31 ) de recouvrement ouverts est monté sans tension d'un côté ou des deux côtés et ainsi un travail sans danger sur les parties ( 21, 22 ) de borne est rendu possible.
